# EUROPÄISCHE PATENTANMELDUNG

(11) **EP 2 045 220 A2**
(43) Veröffentlichungstag der Anmeldung: **08.04.2009**
(21) Anmeldenummer: 08016583.0
(22) Anmeldetag: 19.09.2008
(51) Int. Cl.: C04B 18/02

(54) **Verfahren und Formkörper zur Rückführung von in Hüttenreststoffen enthaltenem Eisen oder Stahl**

(30) Priorität: 20.09.2007 DE 102007045144; 12.03.2008 DE 102008013746
(71) Anmelder: INFRASOIL-SYSTEMS GmbH, 28203 Bremen (DE)
(72) Erfinder: Hartmann, Volker, 27321 Thedinghausen (DE); Hilmer, Uwe, 29525 Uelzen (DE)
(74) Vertreter: Philipp, Matthias

(57) **Zusammenfassung**

Verfahren zur Herstellung von Formkörpern zur Rückführung von in Hüttenreststoffen enthaltenem Eisen oder Stahl in einen Eisen- oder Stahlproduktionsprozeß, bei dem Fe-haltige Hüttenreststoffe mit Wasser und Zement zu einem Ausgangsmaterial gemischt werden und dieses verdichtet und ausgehärtet wird, und Verfahren zum Rückführen von in Hüttenreststoffen enthaltenem Eisen oder Stahl in einen Eisen- oder Stahlproduktionsprozeß sowie Formkörper für diesen Zweck, der mit Hüttenreststoffen hergestellt ist.

## Beschreibung

Die Erfindung betrifft ein Verfahren zur Herstellung von Formkörpern zur Rückführung von in Hüttenreststoffen, wie beispielsweise Stäuben und Schlämmen aus Filteranlagen von Stahlwerksentstaubungen und aus der Reinigung des Wasserkreislaufsystems, enthaltenem Eisen oder Stahl in einen Eisen- oder Stahlproduktionsprozeß, ein Verfahren zur Rückführung von in Hüttenreststoffen enthaltenem Eisen oder Stahl in einen Eisen- oder Stahlproduktionsprozeß, und einen Formkörper für diesen Zweck, der aus Hüttenreststoffen hergestellt ist.

Bei der Herstellung von Eisen und Stahl fallen in Hüttenbetrieben große Mengen an Fe-haltigen Reststoffen an, die für einen direkten Wiedereinsatz im Hochofen oder im Konverter zu fein (bis 20 mm) sind. Hierbei handelt es sich etwa um folgende Stoffe: Grobschlamm aus Klassierer, Flämmzunder, Feinschlamm, insbesondere aus Absetzbecken, Walzensinterschlamm, Walzensinter, insbesondere aus Absetzbrunnen, Separationseisen, Separationsstahl, Feineisen, Staub aus Gießhalle (Hochofen), Staub aus Entstaubungsanlage der Roheisenentschwefelung, Staub oder Schlamm aus Verzinkungslinien, jeweils in Körnung bis 20 mm. Insbesondere fallen erhebliche Mengen an Filterstaub an, der einen großen Anteil an verwertbarem Eisen und Stahl enthält, beispielsweise etwa 60 %, und der üblicherweise mit Wasser vermischt als sogenannter Hüttenschlamm in Becken gespült wird. Lediglich ein kleiner Teil des Hüttenschlamms kann bisher in Sinteranlagen aufbereitet und verwertet werden, während der größte Teil deponiert wird.

Separationsstahl und Flämmzunder werden heute in Sinteranlagen mit anderen Stoffen für den Einsatz im Hochofen gesintert.

Separationseisen aus Entschwefelungsschlacke kann nach Aufbereitung den Torpedowagen zur Wiederverwertung zugeführt werden.

Die Erfindung hat sich zur Aufgabe gestellt, eine Möglichkeit aufzuzeigen, wie die anfallenden Fe-haltigen Reststoffe weitgehend, auch unter Ausnutzung feiner Fraktionen und unter Berücksichtigung des jeweiligen Schwefelgehalts, in den Produktionsprozeß zurückgeführt werden können.

Diese Aufgabe wird zunächst durch ein Verfahren zur Herstellung von Formkörpern zur Rückführung von in Hüttenreststoffen enthaltenem Eisen oder Stahl in einen Eisen- oder Stahlproduktionsprozeß gelöst, wobei Fe-haltige Hüttenreststoffe mit Wasser und Zement zu einem Ausgangsmaterial gemischt werden und dieses verdichtet und ausgehärtet wird.

Die Aufgabe wird ferner gelöst durch ein Verfahren zum Rückführen von in Hüttenreststoffen enthaltenem Eisen oder Stahl in einen Eisen- oder Stahlproduktionsprozeß, wobei Fe-haltige Hüttenreststoffe mit Wasser und Zement zu einem Ausgangsmaterial gemischt, verdichtet und zu Formkörpern ausgehärtet werden, und wobei die Formkörper in den Eisen- oder Stahlproduktionsprozeß zurückgeführt werden.

Das Ausgangsmaterial kann vor dem Verdichten pumpfähig sein.

Das Ausgangsmaterial kann zusätzlich Hüttensand und ein Haftmittel enthalten.

Es kann vorgesehen sein, daß ein Wassergehalt von 5 - 15 Gew.-%, insbesondere 10 bis 12 Gew.-% oder 11 Gew.-%, bezogen auf die Fe-haltigen Hüttenreststoffe, eingestellt wird.

Der Hüttensand kann folgende Zusammensetzung aufweisen: CaO 30 - 45 Gew.-%, SiO₂ 30 - 45 Gew.-%, Al₂O₃ 5 - 15 Gew.-%, MgO 4 - 17 Gew.-% und S 0,5 - 1,5 Gew.-%. Darüber hinaus kann der Hüttensand einen oder mehrere der folgenden Bestandteile enthalten: Fe 0,2 - 0,3 Gew.-%, Mn 0,1 - 0,2 Gew.-%, TiO₂ 0,5 - 1,5 Gew.-%, K₂O 0,5 - 1,0 Gew.-% und Na₂O 0,2 - 1,0 Gew.-%.

Der Zement kann in einer Zugabemenge von 8 bis 15 Gew.-%, insbesondere 10 Gew.-%, bezogen auf die Trockenmasse des Hüttenschlamms, enthalten sein.

Der Zement kann eine Anfangsfestigkeit von mindestens 20 MPa und insbesondere mindestens 30 MPa aufweisen. Der Zement kann eine Normfestigkeit von mindestens 40 MPa und insbesondere mindestens 50 MPa aufweisen. Die Bandbreite der Zementqualität liegt zwischen CEM III A 42,5 N und CEM I 52,5 R. Bevorzugt ist die Zementqualität CEM I 52,5 R.

Der Hüttensand kann in einer Zugabemenge von 2 bis 8 Gew.-%, insbesondere 5 Gew.-%, enthalten sein.

Das Haftmittel ist bevorzugt Zuckerrohrmelasse und/oder Zuckerrübenmelasse, zweckmäßigerweise 1:1 mit Wasser verdünnt, und kann in einer Zugabemenge von 2 bis 5 Gew.-%, insbesondere 3 Gew.-%, bezogen auf die Trockenmasse des Hüttenschlamms, enthalten sein. Der Gesamtzuckergehalt kann 45 bis 49 % oder 47 % betragen.

Die Aufgabe der Erfindung wird ferner gelöst durch einen Formkörper zur Rückführung von in Hüttenreststoffen enthaltenem Eisen oder Stahl in einen Eisen- oder Stahlproduktionsprozeß, wobei der Formkörper Fe-haltige Hüttenreststoffe und Zement enthält. Der Formkörper kann zusätzlich Hüttensand und ein Haftmittel enthalten.

Die Zusammensetzung des Hüttensands sowie die Zugabemengen von Zement und Haftmittel können den Angaben entsprechen, die vorstehend zu den Verfahren ausgeführt sind.

Es kann in Bezug auf die Verfahren und den Formkörper vorgesehen sein, daß die Hüttenreststoffe einen oder mehrere der folgenden Stoffe umfassen: Grobschlamm aus Klassierer, Flämmzunder, Feinschlamm, insbesondere aus Absetzbecken, Walzensinterschlamm, Walzensinter, insbesondere aus Absetzbrunnen, Separationseisen, Separationsstahl, Staub aus Gießhalle (Hochofen), Staub aus Gießhalle (LD-Verfahren), Staub aus Entstaubungsanlage der Roheisenentschwefelung, Staub oder Schlamm aus Verzinkungslinen, jeweils in Körnung bis 20 mm.

In einem ersten Ausführungsbeispiel hat der bei der Herstellung von Stahl als mit Wasser vermischter Filterstaub anfallende Hüttenschlamm einen Wassergehalt von etwa 7 Gew.-% und eine Korngröße von 0 bis 20 mm und weist einen Anteil von etwa 60 Gew.-% (bezogen auf die Trockenmasse) verwertbarem Eisen auf. Der Hüttenschlamm wird mit etwa 10 Gew.-% (alle Zuschlagsmengen sind auf die Trockenmasse des Hüttenschlamms bezogen) Zement der Qualität CEM I 52,5 R, 5 Gew.-% Hüttensand und 3 Gew.-% einer 1:1 Mischung aus Zuckerrohrmelasse oder Zuckerrübenmelasse und Wasser zu einem Ausgangsmaterial vermischt, verdichtet und/oder verpreßt und anschließend ausgehärtet. Die zugeschlagene Zuckerrüben- oder Zuckerrohrmelasse hat als Haftmittel die Aufgabe, die Formkörper unmittelbar nach dem Verpressen oder Verdichten im noch feuchten, unausgehärteten Zustand zusammenzuhalten, so daß sie vor dem Aushärten nicht zerfallen.

Der Gesamtzuckergehalt von Zuckerrübenmelasse (unverdünnt) beträgt etwa 47 % oder mehr, der Trockensubstanzgehalt 76 bis 79 % und der Wassergehalt weniger als 28 %.

Zuckerrohrmelasse als Restprodukt der Zuckerfabrikation aus Zuckerrohr enthält ca. 28 bis 30 % Wasser, ca. 45 % Gesamtzucker und ca. 17 % organische Nichtzuckerstoffe.

Die Melasse mit der vorstehend genannten Zusammensetzung wird zunächst im Verhältnis 1:1 mit Wasser vermischt, bevor die Mischung dann in dem genannten Anteil von 3 Gew.-% zugeschlagen wird.

Sämtliche Komponenten werden gründlich gemischt und zu Formkörpern, d.h. Körpern beliebiger Form, verpreßt oder verdichtet, beispielsweise zu kubischen oder quaderförmigen Blöcken mit unterschiedlicher Kantenlänge. Die gepreßten oder verdichteten Formkörper härten bei Umgebungstemperatur, beispielsweise bei Temperaturen zwischen 5°C und 30°C, innerhalb von ein bis drei Tagen, bevorzugt innerhalb von 48 Stunden, aus. Danach haben sie eine ausreichende Festigkeit, um in einen Stahlproduktionsprozeß zurückgeführt zu werden. Hierbei werden die Formkörper einer Eisenschmelze im Hochofen oder im Flüssigeisentransporter, auch als Torpedowagen bezeichnet, oder einer Stahlschmelze, z.B. im Konverter, zugegeben, wobei sie aufschmelzen, so daß das enthaltene Eisen und/oder der Stahl unmittelbar zurückgewonnen werden kann.

Der zugeschlagene Zement hat als Bindemittel die Aufgabe, dem Formkörper die notwendige Festigkeit zu geben, damit dieser bei der späteren Zugabe in schmelzflüssigen Stahl nicht vorzeitig aufplatzt, sondern erst bei Temperaturen ab ca. 900°C schmilzt. Zu diesem Zwecke weist der verwendete Zement 95 bis 100 % Portlandzementklinker auf und hat eine Anfangsfestigkeit (2 Tage) von mindestens 10 MPa und eine Normfestigkeit (28 Tage) von mindestens 42,5 MPa.

Bevorzugt wird Portlandzement der Qualität CEM I 52,5 R verwendet, mit einer Normdruckfestigkeit EM 196 von 40 MPa (2 Tage) und 70 MPa (28 Tage), und mit folgenden mechanischen Daten: Spezifische Oberfläche 5335 cm²/g, Wasseranspruch 29,8 Masse-%, Erstarren - Anfang 131 Min., Raumbeständigkeit 0 mm. Chemische Analyse: Glühverlust 2,48, unlöslicher Rückstand 0,67, SiO₂ 21,66, Al₂O₃ 5,17, Fe₂O₃ 2,87, CaO 66,3, MgO 0,83, SO₃ 2,5, Na₂O 0,25, K₂O 0,41, Na₂O (äquivalent) 0,52, Chlorid 0,05, C₃S 60,3, C₂S 16,6, C₃A 8,8 und C₄AF 8,7 (jeweils in Masse-%). Der Kalkstandard beträgt 94,0.

Bei der vorstehend beschriebenen Ausführungsform der Erfindung kann das Ausgangsmaterial in Formen eingebracht, verdichtet, entformt und ausgehärtet werden. Die Verdichtung kann bei kleinen geometrischen Formen durch Vibration erfolgen, beispielsweise auf einem Rütteltisch oder durch sogenannte Außenrüttler.

Bei großflächigen Formen erfolgt die Verdichtung durch Walzen oder Rüttelplatten. Diese Verdichtung erfolgt statisch und/oder dynamisch.

Alternativ kann ohne Formen gearbeitet werden, z.B. indem das Ausgangsmaterial in einer Schicht beliebiger Dicke, z.B. 10 cm oder 20 cm, auf einem festen Untergrund ausgebracht, verdichtet und ausgehärtet wird. Das ausgehärtete Material kann dann in Stücke oder Formkörper benötigter Größe gebrochen werden.

In einer anderen Ausführungsform der Erfindung entfallen die Komponenten Hüttensand und Haftmittel, d.h. das Ausgangsmaterial enthält Hüttenreststoffe, Wasser und Zement. Hierbei ist das Ausgangsmaterial bevorzugt pumpfähig, so daß es in Formen gepumpt werden kann.

Die Verdichtung erfolgt in diesem Fall durch Außen- oder Innenrüttler (Rüttelflaschen).

In einer weiteren Ausführungsform der Erfindung kann mit einem Kompaktierer gearbeitet werden, um Formkörper in Kubus- oder Quaderform mit Seitenlängen bspw. zwischen 5 cm und 30 cm herzustellen.

Je nach Schwefelgehalt der zu verarbeitenden Hüttenreststoffe werden die hergestellten Formkörper unterschiedlich weiterverarbeitet. Bei eisen- und schwefelhaltigen Reststoffen werden bevorzugt Formkörper mit größeren Abmessungen, beispielsweise kubische oder quaderförmige Körper mit Kantenlängen von 5 bis 30 cm hergestellt und einer Eisenschmelze im Hochofen oder in Flüssigeisentransportern, auch als Torpedowagen bezeichnet, zugegeben, wo sie aufschmelzen. Hierbei kommen insbesondere folgende schwefelhaltige Hüttenreststoffe zum Einsatz: Separationseisen, Staub aus Gießhalle (Hochofen), Staub aus der Entstaubungsanlage der Roheisenentschwefelung.

Stahlhaltige Hüttenreststoffe werden bevorzugt zu Formkörpern mit kleineren Abmessungen, beispielsweise kubische Formkörper mit Kantenlängen von 5 bis 10 cm verarbeitet und einer Stahlschmelze, insbesondere im Konverter, zum Wiedereinsatz zugeführt. Hierfür werden insbesondere folgende im wesentlichen schwefelfreie oder schwefelarme Hüttenreststoffe eingesetzt: Grobschlamm, Separationsstahl, Feinschlamm nach dem Trocknen, Flämmzunder, Walzensinter, Walzensinterschlamm, Stäube und Schlämme aus den Verzinkungslinien.

Eine Vorrichtung zum Herstellen der erfindungsgemäßen Formkörper wird nachfolgend anhand einer Zeichnung erläutert, wobei

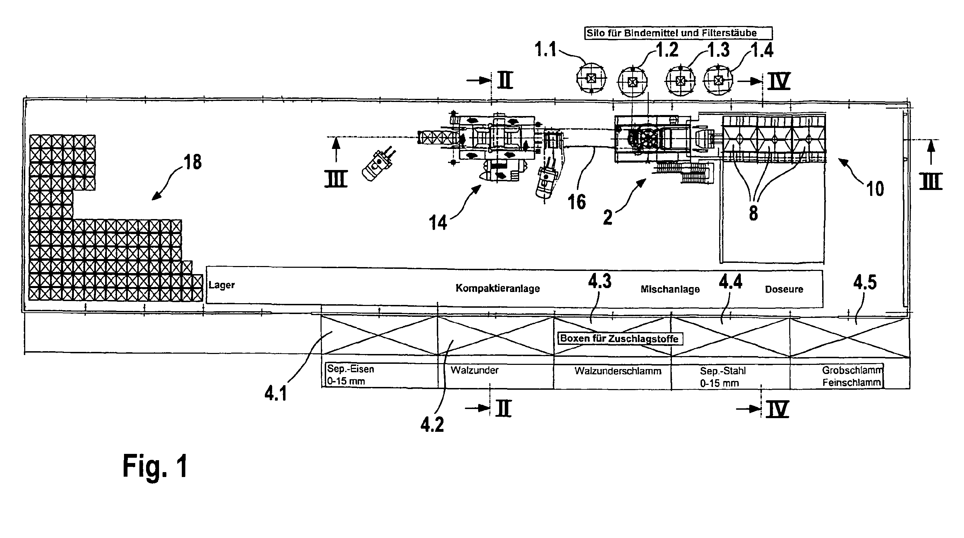

Fig. 1 eine Draufsicht auf eine Anlage zur Herstellung von Hüttenreststoff-Formkörpem zeigt,

Fig. 2 eine Schnittansicht entlang Linie II - II in Fig. 1 zeigt,

Fig. 3 eine Schnittansicht entlang Linie III - III in Fig. 1 zeigt, und

Fig. 4 eine Schnittansicht entlang Linie IV -IV in Fig. 1 zeigt.

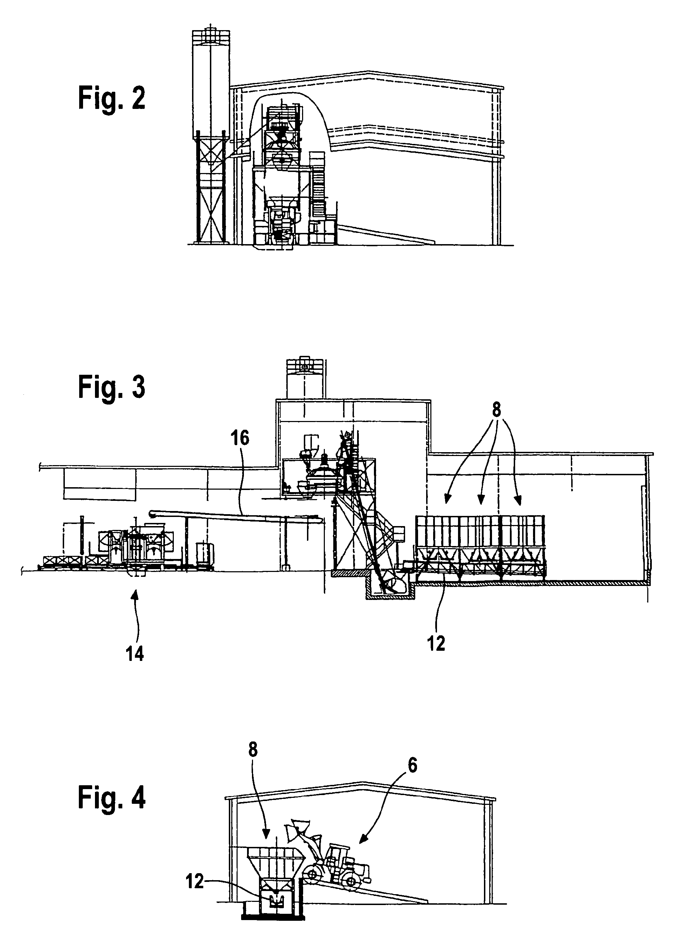

Eine Anzahl von Silos 1.1, 1.2, 1.3, 1.4 hält staubförmige Zuschlagstoffe wie Bindemittel und Filterstäube bereit, die mittels nicht dargestellter Förder- und Dosierschnecken einer Mischanlage 2 zudosiert werden können. Weitere, nicht staubende Zuschlagstoffe stehen in Vorratsbehältern 4.1 bis 4.5 bereit. Diese Zuschlagstoffe können, wie Fig. 4 zeigt, mittels eines Radladers 6 in Trichter 8 von Dosieranlagen (Doseuren) 10 befördert werden, von wo aus sie mittels eines Förderbands 12 dosiert in die Mischanlage 2 transportiert werden. Zusätzlich wird Wasser zugeführt, und alle Bestandteile werden gründlich gemischt. Durch entsprechende Ansteuerung der Dosierschnecken und des dosierfähigen Förderbands 12 kann eine vorgegebene Rezeptur eingehalten werden.

Eine Kompaktieranlage 14 erhält über ein Zuführband 16 das fertig gemischte feuchte Ausgangsmaterial und füllt dieses in Formen, deren Größe der der gewünschten Formkörper entspricht. Das Ausgangsmaterial wird in den Formen verdichtet oder kompaktiert, vor der Aushärtung aus den Formen entnommen und zur Aushärtung in ein geeignetes Lager 18 verbracht.

Zwei parallel arbeitende Kompaktierer sind zweckmäßig, wobei ein sogenannter Bodenleger die größeren Formkörper für den Einsatz im Torpedo (schwefelhaltige Reststoffe) fertigt, und ein Mehrlagenfertiger der Herstellung kleinerer Formkörper (schwefelarme/-freie Reststoffe) für den Einsatz im Konverter dient.

### Bezugszeichenliste

- 1.1 - 1.4: Silo
- 2: Mischanlage
- 4.1 - 4.5: Vorratsbehälter
- 6: Radlader
- 8: Trichter
- 10: Dosieranlage
- 12: Förderband
- 14: Kompaktieranlage
- 16: Zuführband
- 18: Lager

## Patentansprüche

1. Verfahren zur Herstellung von Formkörpern zur Rückführung von in Hüttenreststoffen enthaltenem Eisen oder Stahl in einen Eisen- oder Stahlproduktionsprozeß, **dadurch gekennzeichnet, daß** Fe-haltige Hüttenreststoffe mit Wasser und Zement zu einem Ausgangsmaterial gemischt werden und dieses verdichtet und ausgehärtet wird.

2. Verfahren zum Rückführen von in Hüttenreststoffen enthaltenem Eisen oder Stahl in einen Eisen- oder Stahlproduktionsprozeß, **dadurch gekennzeichnet, daß** Fe-haltige Hüttenreststoffe mit Wasser und Zement zu einem Ausgangsmaterial gemischt, verdichtet und zu Formkörpern ausgehärtet werden, und daß die Formkörper in den Eisen- oder Stahlproduktionsprozeß zurückgeführt werden.

3. Verfahren nach Anspruch 1 oder 2, **dadurch gekennzeichnet, daß** das Ausgangsmaterial vor dem Verdichten pumpfähig ist.

4. Verfahren nach Anspruch 1 oder 2, **dadurch gekennzeichnet, daß** das Ausgangsmaterial zusätzlich Hüttensand und ein Haftmittel enthält.

5. Verfahren nach Anspruch 4, **dadurch gekennzeichnet, daß** ein Wassergehalt von 5 - 15 Gew.-%, insbesondere 10 bis 12 Gew.-% oder 11 Gew.-%, bezogen auf die Hüttenreststoffe, eingestellt wird.

6. Verfahren nach Anspruch 4 oder 5, **dadurch gekennzeichnet, daß** Hüttensand mit folgender Zusammensetzung verwendet wird: CaO 30 - 45 Gew%, SiO₂ 30 - 45 Gew.-%, Al₂O₃ 5 - 15 Gew.-%, MgO 4 - 17 Gew.-% und S 0,5 - 1,5 Gew.-%; und fakultativ noch mit einem oder mehreren der folgenden Bestandteile: Fe 0,2 - 0,3 Gew.-%, Mn 0,1 - 0,2 Gew.-%, TiO₂ 0,5 - 1,5 Gew.-%, K₂O 0,5 - 1,0 Gew.-% und Na₂O 0,2 - 1,0 Gew.-%.

7. Verfahren nach einem der vorangehenden Ansprüche, **dadurch gekennzeichnet, daß** der Zement in einer Zugabemenge von 8 - 15 Gew.-%, insbesondere 10 Gew.-%, bezogen auf die Trockenmasse der Hüttenreststoffe, enthalten ist.

8. Verfahren nach einem der vorangehenden Ansprüche, **dadurch gekennzeichnet, daß** der Zement eine Anfangsfestigkeit von mindestens 10 MPa und insbesondere mindestens 30 MPa und eine Normfestigkeit von mindestens 10 MPa und insbesondere mindestens 50 MPa aufweist.

9. Verfahren nach einem der vorangehenden Ansprüche, **dadurch gekennzeichnet, daß** die Zementqualität einem CEM III A 42,5 N oder einem CEM I 52,5 R entspricht.

10. Verfahren nach einem der vorangehenden Ansprüche, sofern auf Anspruch 3 rückbezogen, **dadurch gekennzeichnet, daß** Hüttensand in einer Zugabemenge von 2 - 8 Gew.-%, insbesondere 5 Gew.-%, bezogen auf die Trockenmasse der Hüttenreststoffe verwendet wird.

11. Verfahren nach einem der vorangehenden Ansprüche, sofern auf Anspruch 4 rückbezogen, **dadurch gekennzeichnet, daß** Haftmittel in einer Zugabemenge von 2 - 5 Gew.-%, insbesondere 3 Gew.-%, bezogen auf die Trockenmasse der Hüttenreststoffe, verwendet wird.

12. Verfahren nach einem der vorangehenden Ansprüche, **dadurch gekennzeichnet, daß** das Ausgangsmaterial vor dem Verdichten und Aushärten in Formen eingebracht wird.

13. Formkörper zur Rückführung von in Hüttenreststoffen enthaltenem Eisen oder Stahl in einen Eisen- oder Stahlproduktionsprozeß, **dadurch gekennzeichnet, daß** der Formkörper Fe-haltige Hüttenreststoffe und Zement enthält.

14. Formkörper nach Anspruch 13, **dadurch gekennzeichnet, daß** der Formkörper Hüttensand und ein Haftmittel enthält.

15. Formkörper nach Anspruch 14, **dadurch gekennzeichnet, daß** der Hüttensand folgende Zusammensetzung aufweist: CaO 30 - 45 Gew%, SiO₂ 30 - 45 Gew.-%, Al₂O₃ 5 - 15 Gew.-%, MgO 4 - 17 Gew.-% und S 0,5 - 1,5 Gew.-%; und fakultativ noch mit einem oder mehreren der folgenden Bestandteile: Fe 0,2 - 0,3 Gew.-%, Mn 0,1 - 0,2 Gew.-%, TiO₂ 0,5 - 1,5 Gew.-%, K₂O 0,5 - 1,0 Gew.-% und Na₂O 0,2 - 1,0 Gew.-%.

16. Formkörper nach einem der Ansprüche 13 bis 15, **dadurch gekennzeichnet, daß** Zement in einer Zugabemenge von 8 bis 15 Gew.-%, insbesondere 10 Gew.-%, bezogen auf die Trockenmasse der Hüttenreststoffe, enthalten ist.

17. Formkörper nach einem der Ansprüche 14 bis 16, **dadurch gekennzeichnet, daß** Hüttensand in einer Zugabemenge von 2 bis 8 Gew.-%, insbesondere 5 Gew.-%, bezogen auf die Trockenmasse der Hüttenreststoffe, enthalten ist.

18. Formkörper nach einem der Ansprüche 14 bis 17, **dadurch gekennzeichnet, daß** Haftmittel in einer Zugabemenge von 2 bis 5 Gew.-%, insbesondere 3 Gew.-%, bezogen auf die Trockenmasse der Hüttenreststoffe, enthalten ist.

19. Verfahren oder Formkörper nach einem der vorangehenden Ansprüche, **dadurch gekennzeichnet, daß** die Hüttenreststoffe einen oder mehrere der folgenden Stoffe umfassen: Grobschlamm aus Klassierer, Flämmzunder, Feinschlamm, insbesondere aus Absetzbecken, Walzensinterschlamm, Walzensinter, insbesondere aus Absetzbrunnen, Separationseisen, Separationsstahl, Feineisen, Staub aus Gießhalle (Hochofen), Staub aus Entstaubungsanlage der Roheisenentschwefelung, Staub oder Schlamm aus Verzinkungslinien, jeweils in Körnung bis 20 mm.
